# EUROPÄISCHE PATENTSCHRIFT

(11) **EP 3 901 043 B1**
(45) Veröffentlichungstag und Bekanntmachung des Hinweises auf die Patenterteilung: **13.03.2024**
(21) Anmeldenummer: 21169382.5
(22) Anmeldetag: 20.04.2021
(51) Int. Cl.: B64F 5/10, G01S 17/42, G01S 17/66, B23P 19/10, H01H 9/02

(54) **ASSISTENZSYSTEM UND VERFAHREN ZUM POSITIONIEREN EINES ERSTEN BAUTEILS RELATIV ZU EINEM ZWEITEN BAUTEIL UND FERNBEDIENUNG FÜR EIN ASSISTENZSYSTEM**
ASSISTANCE SYSTEM AND METHOD FOR POSITIONING A FIRST COMPONENT RELATIVE TO A SECOND COMPONENT AND REMOTE CONTROL FOR AN ASSISTANCE SYSTEM
SYSTÈME D'AIDE ET PROCÉDÉ DE POSITIONNEMENT D'UN PREMIER COMPOSANT PAR RAPPORT À UN SECOND COMPOSANT ET TÉLÉCOMMANDE POUR UN SYSTÈME D'AIDE

(30) Priorität: 21.04.2020 DE 102020204993
(43) Veröffentlichungstag der Anmeldung: 27.10.2021
(73) Patentinhaber: Premium AEROTEC GmbH, 86179 Augsburg (DE)
(72) Erfinder: Plump, Simon, 86179 Augsburg (DE)
(74) Vertreter: LKGLOBAL Lorenz & Kopf Patentanwalt Attorney at Law PartG mbB

(56) Entgegenhaltungen:
- EP-A2- 2 100 579
- DE-A1-102009 018 991

## Beschreibung

Die vorliegende Erfindung betrifft ein Assistenzsystem und ein Verfahren zum Positionieren eines ersten Bauteils relativ zu einem zweiten Bauteil sowie eine Fernbedienung für ein Assistenzsystem.

Eine Rumpfstruktur eines Luftfahrzeugs ist typischerweise aus Umfangsträgern oder Spanten und Längsträgern oder Stringern zusammengesetzt. Die üblicherweise ringförmigen Umfangsträger sind parallel zueinander angeordnet und mittels der Stringer miteinander verbunden. Innerhalb der Rumpfstruktur sind üblicherweise Böden vorgesehen. Beispielsweise kann in einem Passagierflugzeug mit einer Passagierkabine ein Fußboden vorgesehen sein, auf welchem die Passagiersitze montiert sind. Typischerweise ist auch in der Frachtkabine ein Fußboden vorgesehen.

In der Regel weisen die Fußböden von Luftfahrzeugen Bodenplatten auf, welche auf einer Bodenträgeranordnung montiert sind. Die Bodenträgeranordnung weist typischerweise eine Vielzahl von Querträgern auf, welche jeweils an in Umfangsrichtung beabstandeten Stellen jeweils eines Spants befestigt sind. Bei der Montage der Querträger an den Spanten ist eine möglichst exakte Positionierung der Querträger relativ zu dem Spant wünschenswert.

Die US 8 914 979 B2 beschreibt eine Positionierung von Bodenträgern relativ zu den Spanten einer Rumpfstruktur mithilfe einer Hebebühne.

DE 10 2009 018 991 A1 betrifft, gemäß der Zusammenfassung, eine Vorrichtung zur räumlichen Ausrichtung von mindestens zwei großformatigen Untergruppenbauteilen, insbesondere mindestens einer Seitenschale, mindestens einer Oberschale, mindestens einer Unterschale und/oder mindestens eines Fußbodengerüstes, in Relation zueinander zur Integration eines Bauteils, insbesondere einer Rumpfsektion eines Flugzeugs, umfassend: a) mindestens zwei Positioniereinrichtungen zur Aufnahme jeweils eines Untergruppenbauteils, insbesondere mindestens zwei Seitenschalenpositionierer, mindestens einen Oberschalenpositionierer und/oder mindestens einen Unterschalenpositionierer, b) mindestens eine Messeinrichtung zum Erfassen einer Vielzahl von Messdaten, insbesondere von Positionsdaten der Untergruppenbauteile und/oder der Positioniereinrichtungen, c) mindestens eine Steuer- und/oder Regeleinrichtung, insbesondere mindestens eine CNC-Steuerung, und d) mindestens ein neuronales Netz. Das in die Vorrichtung erfindungsgemäß integrierte neuronale Netz erlaubt es, die Untergruppenbauteile durch simultanes Verfahren der Positioniereinrichtungen in kürzester Zeit und mit hoher Genauigkeit in eine vorgegebene Soll-Geometrie zu bringen. Die Steuer- und/oder Regeleinrichtung dient bevorzugt zur anschließenden Ausrichtung der Untergruppenbauteile in Relation zueinander durch zeitgleich ausgeführte lineare Verfahrbewegungen der Positionierer.

EP 2100579 A2 betrifft, gemäß der bei Espacenet verfügbaren Zusammenfassung, eine Insassenstützvorrichtung die einen Rahmen und eine Insassenstützfläche umfasst, über der ein Insasse gestützt werden kann. Ein Seitengitter hat eine angehobene Position, in der mindestens ein Teil des Seitengitters in der Höhe höher ist als die Patientenauflagefläche. Die Seitenschiene beinhaltet eine Aussparung. Die Insassenunterstützung umfasst auch eine Steuereinheit mit Benutzereingaben, die so konfiguriert sind, dass sie von einem Benutzer aktiviert werden. Die Steuereinheit ist relativ zu der Seitenschiene zwischen einer ersten Position, in der mindestens ein Großteil der Patienten-Steuereinheit in der Aussparung aufgenommen ist, und einer zweiten Position, in d.er mindestens ein Großteil der Steuereinheit außerhalb der Aussparung liegt, bewegbar und erstreckt sich über einen Umfang der Seitenschiene hinaus. In einer Ausführungsform weist die Steuereinheit auch einen oberen Abschnitt auf, der um eine allgemein vertikale Achse schwenkbar ist

Es ist Aufgabe der vorliegenden Erfindung, Lösungen zu finden, mit denen die Positionierung von Bauteilen in einer Montagelinie relativ zueinander erleichtert wird.

Diese Aufgabe wird jeweils durch die Gegenstände der unabhängigen Ansprüche gelöst.

Gemäß einem ersten Aspekt der Erfindung ist ein Assistenzsystem für die Positionierung eines zu positionierenden ersten Bauteils relativ zu einem zweiten Bauteil vorgesehen. Das Assistenzsystem umfasst eine Sensoranordnung, welche dazu eingerichtet ist, in einer ersten Messeinstellung eine aktuelle Position eines ersten Referenzpunktes des ersten Bauteils und in einer zweiten Messeinstellung eine aktuelle Position eines zweiten Referenzpunktes des ersten Bauteils zu erfassen, eine mit der Sensoranordnung kommunikationsverbundene Datenverarbeitungseinrichtung, welche dazu eingerichtet ist, die Messeinstellung der Sensoranordnung zu steuern und basierend auf der je nach Messeinstellung erfassten aktuellen Position des ersten oder des zweiten Referenzpunktes und einer Soll-Position des ersten oder des zweiten Referenzpunktes eine aktuelle erste oder zweite Positionsabweichung zu ermitteln, eine mit der Datenverarbeitungseinrichtung kommunikationsverbundene Displayeinrichtung, welche dazu eingerichtet ist, die aktuelle erste oder zweite Positionsabweichung graphisch auszugeben, und eine Fernbedienung. Die Fernbedienung umfasst ein Gehäuse, welches eine Kopplungsstruktur zur lösbaren Kopplung der Fernbedienung an das erste Bauteil aufweist, ein erstes Bedienelement und eine in dem Gehäuse aufgenommene elektronische Signalerzeugungsschaltung, welche dazu eingerichtet ist, in Antwort auf eine Betätigung des ersten Bedienelements ein Bestätigungssignal zu erzeugen und drahtlos an die Datenverarbeitungseinrichtung zu senden. Die Datenverarbeitungseinrichtung ist dazu eingerichtet, in Antwort auf das Bestätigungssignal die gewählte Messeinstellung der Sensoranordnung zu ändern.

Gemäß einem zweiten Aspekt der Erfindung ist ein Verfahren zum Positionieren eines ersten Bauteils relativ zu einem ortsfesten zweiten Bauteil vorgesehen. Das Verfahren kann insbesondere mithilfe des Assistenzsystems gemäß dem ersten Aspekt der Erfindung durchgeführt werden. Das Verfahren umfasst die folgenden Schritte:
- Befestigen einer Fernbedienung an dem ersten Bauteil;
- Annähern eines ersten Verbindungsbereichs des ersten Bauteils an einen ersten Verbindungsbereich des zweiten Bauteils;
- Erfassen einer aktuellen Position eines im Bereich des ersten Verbindungsbereichs gelegenen ersten Referenzpunktes des ersten Bauteils mittels einer Sensoranordnung, welche mit einer ersten Messeinstellung betrieben wird;
- Ermitteln einer ersten Positionsabweichung des ersten Referenzpunktes durch Vergleich der aktuellen Position des ersten Referenzpunktes mit einer Soll-Position des ersten Referenzpunktes mittels einer Datenverarbeitungseinrichtung;
- Anzeigen der ersten Positionsabweichung mittels einer Displayeinrichtung;
- Fixieren des ersten Verbindungsbereichs des ersten Bauteils an dem ersten Verbindungsbereich des zweiten Bauteils, wenn die Positionsabweichung einen vorbestimmten ersten Schwellwert unterschreitet;
- Betätigen eines ersten Bedienelements der Fernbedienung, um ein Bestätigungssignal an die Datenverarbeitungseinrichtung zu senden;
- Umschalten der Sensoranordnung in eine zweite Messeinstellung mittels der Datenverarbeitungseinrichtung in Antwort auf das Bestätigungssignal;
- Annähern eines zweiten Verbindungsbereichs des ersten Bauteils an einen zweiten Verbindungsbereich des zweiten Bauteils;
- Erfassen einer aktuellen Position eines im Bereich des zweiten Verbindungsbereichs gelegenen zweiten Referenzpunktes des ersten Bauteils mittels der Sensoranordnung, welche mit der zweiten Messeinstellung betrieben wird;
- Ermitteln einer zweiten Positionsabweichung des zweiten Referenzpunktes durch Vergleich der aktuellen Position des zweiten Referenzpunktes mit einer Soll-Position des zweiten Referenzpunktes mittels der Datenverarbeitungseinrichtung;
- Anzeigen der zweiten Positionsabweichung mittels der Displayeinrichtung;
   und
- Fixieren des zweiten Verbindungsbereichs des ersten Bauteils an dem zweiten Verbindungsbereich des zweiten Bauteils, wenn die Positionsabweichung einen vorbestimmten zweiten Schwellwert unterschreitet.

Eine der Erfindung zugrundeliegende Idee besteht darin, beim Positionieren eines Bauteils eine aktuelle Positionsabweichung eines Referenzpunktes des Bauteils gegenüber einer Soll-Position sensormesstechnisch zu ermitteln, auf einem Display anzuzeigen und eine Fernbedienung an dem zu positionierenden Bauteil zu befestigen, mit welcher nach erfolgreicher Positionierung des Referenzpunktes des Bauteils durch manuelles Betätigen eines Bedienelements ein Bestätigungssignal erzeugt werden kann, um eine Vermessung der aktuellen Position eines weiteren Referenzpunkt des Bauteils zu starten und diesen weiteren Referenzpunkt in gleicher Weise zu positionieren. Die aktuelle Position des jeweiligen Referenzpunktes des zu positionierenden Bauteils kann mittels einer Sensoranordnung, z.B. mithilfe optischer Sensoren, erfasst werden. Die aktuelle Positionsabweichung des jeweiligen Referenzpunktes kann mithilfe einer Datenverarbeitungseinrichtung, wie einem Computer, als eine Differenz zwischen einer Soll-Position und der aktuellen Ist-Position ermittelt werden. Die Positionsabweichung kann insbesondere Datensätze für drei senkrecht zueinander stehende Raumrichtungen enthalten.

Ein Vorteil der Erfindung liegt darin, dass dem Personal, das die Positionierung des Bauteils durchführt, durch die Kombination aus der Anzeige der aktuellen Positionsabweichung und der Fernbedienung die Kontrolle der Positionierung und die Durchführung der Vermessung der aktuellen Position der Referenzpunkte des Bauteils erleichtert wird. Die Fernbedienung erleichtert das Umschalten der Sensoranordnung zur Vermessung eines weiteren Referenzpunktes. Insbesondere muss das Personal das Bauteil nicht verlassen, um die Messeinstellung der Sensoranordnung zu verändern. Durch die Kopplungsstruktur der Fernbedienung, welche beispielsweise eine formschlüssige, lösbare Halterung der Fernbedienung an dem Bauteil ermöglicht, wird eine sichere und zuverlässige Unterbringung der Fernbedienung während der Durchführung der Positionierung bereitgestellt. Insbesondere kann einem Herunterfallen der Fernbedienung entgegengewirkt und dadurch besser vermieden werden, dass durch die Fernbedienung das zu positionierende Bauteil oder weitere sich in der Umgebung befindliche Bauteile beschädigt werden. Außerdem wird die Arbeitsergonomie für das Personal verbessert.

Vorteilhafte Ausgestaltungen und Weiterbildungen ergeben sich aus den auf die unabhängigen Ansprüche rückbezogenen Unteransprüchen in Verbindung mit der Beschreibung.

Gemäß manchen Ausführungsformen kann vorgesehen sein, dass das Gehäuse der Fernbedienung einen ersten Gehäuseabschnitt aufweist, in welchem die Kopplungsstruktur ausgebildet ist, und einen zweiten Gehäuseabschnitt, in welchem das erste Bedienelement angeordnet ist und welcher sich angewinkelt relativ zu dem ersten Gehäuseabschnitt erstreckt. Auf diese Weise wird die Betätigung des Bedienelements erleichtert, wenn die Fernbedienung mit der Kopplungs- oder Haltestruktur an dem ersten Bauteil befestigt ist.

Gemäß manchen Ausführungsformen kann vorgesehen sein, dass die Kopplungsstruktur eine eine Unterseite des Gehäuses definierende Bodenwandung und einen von der Bodenwandung vorspringenden hakenförmigen oder L-förmigen Bereich aufweist, und wobei die Bodenwandung eine in einem ersten Abstand zu dem hakenförmigen oder L-förmigen Bereich angeordnete erste Stufe ausbildet. Der haken- oder L-förmige Bereich kann insbesondere einen von der Bodenwandung vorstehenden ersten Steg und einen am entgegensetzt zu der Bodenwandung gelegenen Ende des ersten Stegs angeordneten zweiten Steg aufweisen, welcher sich parallel zur Bodenwandung erstreckt. Die Stufe kann durch einen Vorsprung der Bodenwandung gebildet sein, wobei sich zwischen der Stufe und dem L-förmigen Bereich ein Aufnahmebereich zur Aufnahme eines Abschnitts des ersten Bauteils erstreckt. Somit kann beispielsweise ein plattenförmiger Abschnitt des ersten Bauteils zwischen den haken oder L-förmigen Abschnitt und die erste Stufe eingeschoben werden. Der zweite Steg des haken oder L-förmigen Abschnitt hintergreift hierbei den plattenförmigen Abschnitt des ersten Bauteils, wodurch eine formschlüssige, lösbare Kopplung auf konstruktiv einfache und robuste Weise realisiert wird.

Gemäß manchen Ausführungsformen kann vorgesehen sein, dass die Bodenwandung zusätzlich zu der ersten Stufe eine zweite Stufe ausbildet, welche in einem zweiten Abstand zu dem hakenförmigen Bereich angeordnet ist, wobei der zweite Abstand größer als der erste Abstand ist. Die zweite Stufe steht gegenüber der ersten Stufe vor. Durch das Vorsehen weiterer Stufen größerer Höhe und in größerer Entfernung von dem L-förmigen oder hakenförmigen Bereich, können auf einfache Weise Abschnitte des ersten Bauteils mit verschiedener Breite aufgenommen werden. Dadurch wird die Halterung der Fernbedienung an verschiedenen Bereichen des ersten Bauteils erleichtert.

Gemäß manchen Ausführungsformen kann vorgesehen sein, dass das Gehäuse der Fernbedienung aus einem Kunststoffmaterial gebildet ist, z.B. aus einem thermoplastischen Material. Dadurch wird der Beschädigung von Bauteilen, z.B. von Faserverbundbauteilen, vorgebeugt, wenn die Fernbedienung an dem Bauteil befestigt wird oder herunterfallen sollte.

Gemäß manchen Ausführungsformen kann vorgesehen sein, dass das erste Bedienelement als Druckknopf ausgebildet ist. Dies erleichtert weiter die ergonomische Bedienung der Fernbedienung.

Gemäß manchen Ausführungsformen kann vorgesehen sein, dass die Datenverarbeitungseinrichtung einen Datenspeicher aufweist, in welchem die ersten und zweiten Soll-Positionen für eine Vielzahl von ersten Bauteilen gespeichert sind, wobei die Datenverarbeitungseinrichtung dazu eingerichtet ist, die Displayeinrichtung zur Anzeige eines graphischen Symbols zu veranlassen, welches einem aktuell aus der Vielzahl von ersten Bauteilen ausgewählten ersten Bauteil zugeordnet ist, für das ausgewählte erste Bauteil basierend auf der je nach Messeinstellung erfassten aktuellen Position des ersten oder des zweiten Referenzpunktes und der Soll-Position des ersten oder des zweiten Referenzpunktes eine aktuelle erste oder zweite Positionsabweichung des ausgewählten ersten Bauteils zu ermitteln und die Displayeinrichtung zur Anzeige der ermittelten Positionsabweichung zu veranlassen, wobei die Fernbedienung zumindest ein zweites Bedienelement aufweist und die Signalerzeugungsschaltung dazu eingerichtet ist, in Antwort auf die Betätigung des zweiten Bedienelements ein Auswahlsignal zu erzeugen und an die Datenverarbeitungseinrichtung zu senden, und wobei die Datenverarbeitungseinrichtung dazu eingerichtet ist, in Antwort auf das Auswahlsignal ein anderes erstes Bauteil aus der Vielzahl von ersten Bauteilen auszuwählen. Demnach kann über die Betätigung des zweiten Bedienelements der Fernbedienung ein Datensatz für ein bestimmtes zu positionierendes Bauteil ausgewählt werden. Eine Identifikation, z.B. in Form eines graphischen Symbols, des ausgewählten Bauteils wird auf der Displayeinrichtung angezeigt. Ferner wird die Messeinstellung der Sensoranordnung für das jeweils ausgewählte Bauteil veranlasst und die ermittelte Positionsabweichung auf dem Display angezeigt. Somit wird die aufeinander folgende Positionierung mehrerer Bauteile erleichtert.

Gemäß manchen Ausführungsformen kann vorgesehen sein, dass die Datenverarbeitungseinrichtung dazu eingerichtet ist, die Displayeinrichtung zur Anzeige eines Indikators zu veranlassen, wenn die Positionsabweichung einen Schwellwert unterschreitet. Beispielsweise kann für jede Raumrichtung ein Wert für die Positionsabweichung angezeigt werden. Wenn der jeweilige Wert für Positionsabweichung einen zugehörigen Schwellwert unterschreitet kann als Indikator z.B. ein Symbol angezeigt werden oder eine Farbe der Anzeige kann wechseln. Dies erleichtert weiter die Kontrolle der richtigen Positionierung des Bauteils.

Gemäß manchen Ausführungsformen kann vorgesehen sein, dass die Sensoranordnung einen Lasertracker aufweist. Beispielsweise kann der Lasertracker eine Laserquelle, einen Reflektor und einen Empfänger aufweisen, wobei der Reflektor an dem jeweiligen Referenzpunkt des Bauteils angeordnet ist. Der Empfänger empfängt die an dem Reflektor reflektierte Strahlung und ermittelt daraus die aktuelle Position des Reflektors und damit des Referenzpunktes. Derartige Lasertracker erleichtern eine äußerst genaue Positionierung der Bauteile.

Gemäß manchen Ausführungsformen kann vorgesehen sein, dass das zweite Bauteil ein ringförmiger oder ringsegmentförmiger Umfangsträger einer Rumpfstruktur für ein Luftfahrzeug ist, wobei das erste Bauteil ein Querträger für einen Fußboden ist, wobei der erste und der zweite Verbindungsbereich des Querträgers durch entgegengesetzt zueinander gelegene Endbereiche des Querträgers gebildet sind. Demnach können das beschriebene Verfahren und das beschriebene Assistenzsystem äußerst vorteilhaft bei der Montage von Fußböden in einer Rumpfstruktur eines Luftfahrzeugs verwendet werden.

Im Folgenden wird die Erfindung unter Bezugnahme auf die Figuren der Zeichnungen erläutert. Von den Figuren zeigen:
- Fig. 1: eine schematische Ansicht eines Assistenzsystems gemäß einem Ausführungsbeispiel der vorliegenden Erfindung als funktionale Blockdarstellung;
- Fig. 2: eine schematische Darstellung der Positionierung eines Querträgers an einem Umfangsträger einer Rumpfstruktur eines Luftfahrzeugs mithilfe des Assistenzsystems gemäß Fig. 1;
- Fig. 3: eine schematische Ansicht einer Fernbedienung gemäß einem Ausführungsbeispiel der Erfindung, wobei die Fernbedienung an lösbar an einem zu positionierenden Querträger befestigt ist;
- Fig. 4: eine schematisch-funktionale Darstellung der Fernbedienung gemäß einem Ausführungsbeispiel der Erfindung;
- Fig. 5: eine perspektivische Ansicht der Fernbedienung aus Fig. 3;
- Fig. 6: eine Seitenansicht der Fernbedienung aus Fig. 3; und
- Fig. 7: ein schematisches Flussdiagramm eines Verfahrens zum Positionieren eines ersten Bauteils relativ zu einem ortsfesten zweiten Bauteil gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

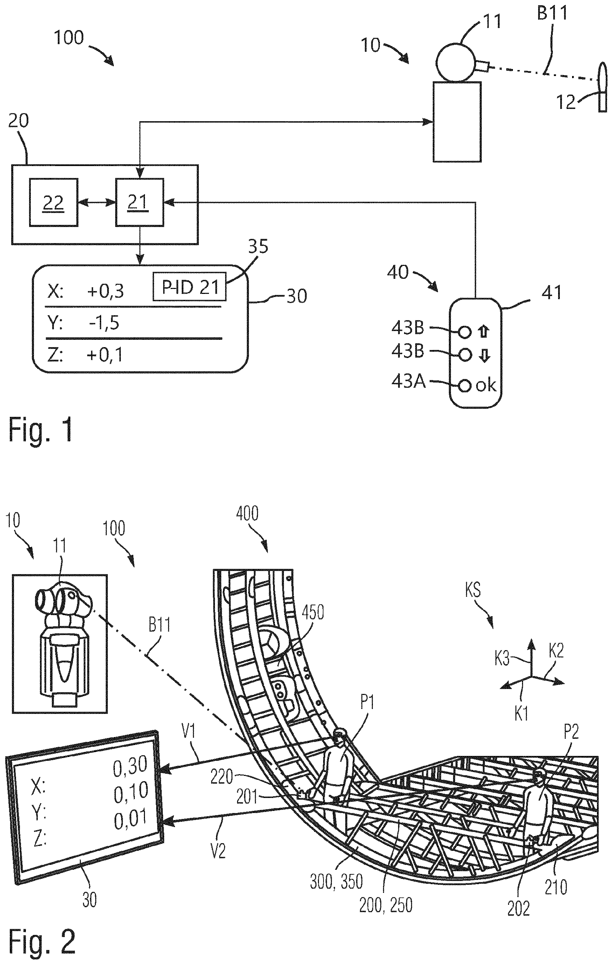

Fig. 1 zeigt schematisch und rein beispielhaft ein Assistenzsystem 100 für die Positionierung eines zu positionierenden ersten Bauteils 200 relativ zu einem zweiten Bauteil 300. Wie in Fig. 1 gezeigt, weist das System 100 beispielsweise eine Sensoranordnung 10, eine Datenverarbeitungseinrichtung 20, eine Displayeinrichtung 30 und eine Fernbedienung 40 auf.

In Fig. 2 ist rein beispielhaft ein Montagevorgang eines Querträgers 250 als erstes Bauteil 200 an einem zweiten Bauteil 300 dargestellt, welches durch einen ortsfesten Umfangsträger 350 einer Rumpfstruktur 400 für ein Luftfahrzeug gebildet ist. Das in Fig. 1 beispielhaft gezeigte Assistenzsystem 100 kann bei diesem Montagevorgang die Personen P1, P2, welche den Querträger 250 an dem Umfangsträger 350 positionieren, bei der genauen Positionierung des Querträgers 250 unterstützen.

Die in Fig. 1 lediglich symbolisch dargestellte Sensoranordnung 10 kann insbesondere als Lasermesssystem realisiert sein, welches einen Lasertracker 11 und einen Reflektor 12 aufweist. Der Lasertracker 11 ist dazu eingerichtet, einen Laserstrahl B11 auf den Reflektor 12 zu emittieren, einen vom Lasertracker reflektierten Laserstrahl zu detektieren und anhand von Eigenschaften des detektieren Laserstrahls eine Position des Reflektors 12 relativ zu dem Lasertracker 11 zu ermitteln. Bei bekannter Position des Lasertrackers 11 innerhalb eines Bezugskoordinatensystems KS kann somit eine Position des Reflektors ermittelt werden. Der Reflektor 12 kann an einem Referenzpunkt 201, 202 des ersten Bauteils 200 angeordnet werden. Somit ist die Sensoranordnung 10 allgemein dazu eingerichtet, eine aktuelle Position eines Referenzpunktes 201, 202 des ersten Bauteils 200 zu erfassen.

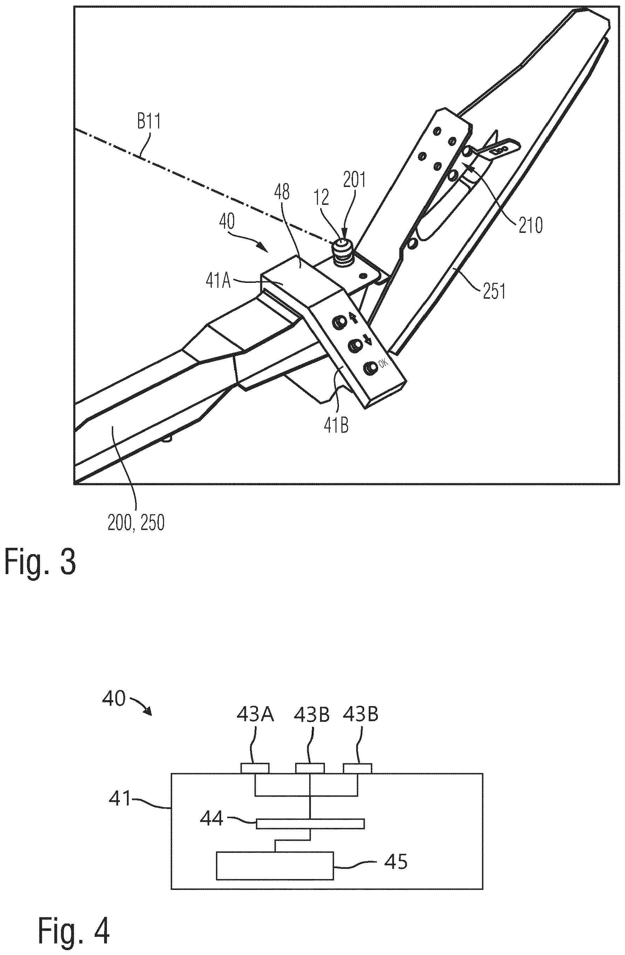

Wie in Fig. 2 beispielhaft gezeigt ist, kann ein erster Referenzpunkt 201 des Querträgers 250 beispielsweise in einem ersten Endbereich und ein zweiter Referenzpunkt 202 in einem entgegengesetzt zu diesem gelegenen zweiten Endbereich gelegen sein. Vorzugsweise liegt der erste Referenzpunkt 201 des ersten Bauteils 200 im Bereich eines ersten Verbindungsbereichs 210 des ersten Bauteils 200 und der zweite Referenzpunkt 201 des ersten Bauteils 200 liegt im Bereich eines zweiten Verbindungsbereichs 220 des ersten Bauteils 200. Die Verbindungsbereiche 210, 220 sind diejenigen Bereiche des ersten Bauteils 200 die mit dem zweiten Bauteil 300 verbunden werden sollen. Wie in Fig. 3 beispielhaft gezeigt ist, kann der Reflektor 12 des Lasermesssystems z.B. in einer Bohrung, welche den ersten Referenzpunkt 201 bildet, angeordnet sein.

Die Sensoranordnung 10 ist ferner zum Betrieb in einer ersten Messeinstellung und in einer zweiten Messeinstellung eingerichtet. In der ersten Messeinstellung erfasst die Sensoranordnung 10 eine aktuelle Position des ersten Referenzpunktes 201 des ersten Bauteils 200 und in der zweiten Messeinstellung erfasst die Sensoranordnung 10 eine aktuelle Position des zweiten Referenzpunktes 202 des ersten Bauteils 200. Die aktuelle Position des ersten oder des zweiten Referenzpunktes 201, 202 kann insbesondere jeweils aus den Koordinaten des jeweiligen Referenzpunktes 201, 202 in einem trackerfesten Koordinatensystem oder in dem Bezugskoordinatensystem KS enthalten. Das Bezugskoordinatensystem KS kann insbesondere ein kartesisches Koordinatensystem mit drei aufeinander senkrecht stehenden Koordinatenachsen K1, K2, K3 sein.

Die Datenverarbeitungseinrichtung 20 ist in Fig. 1 lediglich schematisch dargestellt und kann insbesondere einen Prozessor 21, z.B. eine CPU, einen FPGA, einen ASIC oder dergleichen, und einen durch den Prozessor 21 lesbaren Datenspeicher 22 aufweisen. Der Datenspeicher 22 kann insbesondere ein nicht-flüchtiger Datenspeicher sein, wie z.B. wie eine Festplatte (HDD), ein Flash-Speicher, ein SSD-Speicher oder dergleichen. Der Datenspeicher 22 kann Software speichern, die durch den Prozessor 21 ausführbar ist und den Prozessor 21 zur Ausgabe von Ausgangsignalen basierend auf Eingangssignalen veranlasst.

Wie in Fig. 1 schematisch dargestellt, ist die Datenverarbeitungseinrichtung 20 mit der Sensoranordnung 10 kommunikationsverbunden, z.B. über eine drahtlose Datenverbindung, wie WiFi, Bluetooth oder dergleichen, oder über eine drahtgebundene Datenverbindung, wie z.B. Ethernet, USB, CAN-Bus oder dergleichen. Die Datenverarbeitungseinrichtung 20 erhält somit die von der Sensoranordnung 10 erfassten aktuellen Positionsdaten des ersten Referenzpunktes 201 oder des zweiten Referenzpunktes 202, je nach Messeinstellung der Sensoranordnung 10.

Die Datenverarbeitungseinrichtung 20, ist dazu eingerichtet, die Messeinstellung der Sensoranordnung 10 zu steuern. Das heißt, die Datenverarbeitungseinrichtung 20 kann ein Steuersignal erzeugen, welches die Sensoranordnung 10 dazu veranlasst, von der ersten Messeinstellung in die zweite Messeinstellung umzuschalten oder umgekehrt. Ferner ist die Datenverarbeitungseinrichtung 20 dazu eingerichtet, basierend auf der je nach Messeinstellung erfassten aktuellen Position des ersten oder des zweiten Referenzpunktes 201, 202 und einer Soll-Position des ersten oder des zweiten Referenzpunktes 201, 202 eine aktuelle erste oder zweite Positionsabweichung zu ermitteln. Beispielsweise kann die Datenverarbeitungseinrichtung 20 für jede Koordinate der erfassten aktuellen Position eine Differenz zu der entsprechenden Koordinate der Soll-Position ermitteln. Die Soll-Positionen für den jeweiligen Referenzpunkt 201, 202 können z.B. für verschiedene erste Bauteile 200 in dem Datenspeicher 22 gespeichert sein.

Wie in Fig. 1 weiterhin schematisch gezeigt ist, kann die Displayeinrichtung 30 separat von der Datenverarbeitungseinrichtung 20 realisiert bzw. angeordnet sein. Die Displayeinrichtung 30 kann beispielsweise als LCD-Display, als LED-Display, als OLED-Display, als Röhrenbildschirm oder dergleichen realisiert sein. Allgemein kann die Displayeinrichtung 30 zur Anzeige oder Wiedergabe graphischer Symbole oder Darstellungen eingerichtet sein.

Die Displayeinrichtung 20 ist mit der Datenverarbeitungseinrichtung 20 kommunikationsverbunden, z.B. über eine drahtgebundene Verbindung, wie z.B. Ethernet, HDMI, USB, DVI, VGA oder dergleichen. Eine drahtlose Verbindung, z.B. über WiFi, Bluetooth oder dergleichen wäre ebenfalls denkbar. Die Displayeinrichtung 20 kann somit Daten bzw. Signale von der Datenverarbeitungseinrichtung 20 erhalten und ist dazu eingerichtet, die aktuelle erste oder zweite Positionsabweichung graphisch auszugeben. In Fig. 1 ist dies lediglich symbolisch dargestellt, wobei für die Raumrichtung K1 des Bezugskoordinatensystems KS eine Positionsabweichung "X" von +0,3 (z.B. mm), für die Raumrichtung K2 des Bezugskoordinatensystems KS eine Positionsabweichung "Y" von -1,5 (z.B. mm) und für die Raumrichtung K3 des Bezugskoordinatensystems KS eine Positionsabweichung "Z" von +0,1 (z.B. mm) angezeigt wird. Ferner kann die Displayeinrichtung 20 dazu eingerichtet sein, veranlasst durch die Datenverarbeitungseinrichtung 20, ein graphisches Symbol 35 anzuzeigen, welches einem aktuell aus der Vielzahl von ersten Bauteilen 200, für die Soll-Positionen im Datenspeicher 22 gespeichert sind, ausgewählten ersten Bauteil 200 zugeordnet ist. Somit wird optional zusätzlich angezeigt, welches Bauteil 200 aktuell vermessen wird.

Das Assistenzsystem 100 umfasst ferner eine Fernbedienung 40. Die Fernbedienung 40 ist in den Fign. 1 und 4jeweils in schematischer Weise dargestellt. Die Fign. 3, 5 und 6 zeigen beispielhaft eine mögliche Realisierung der Fernbedienung 40. Allgemein umfasst die Fernbedienung 40 ein Gehäuse 41, ein erstes Bedienelement 43A, ein oder mehrere optionale zweite Bedienelemente 43B und eine Signalerzeugungsschaltung 44.

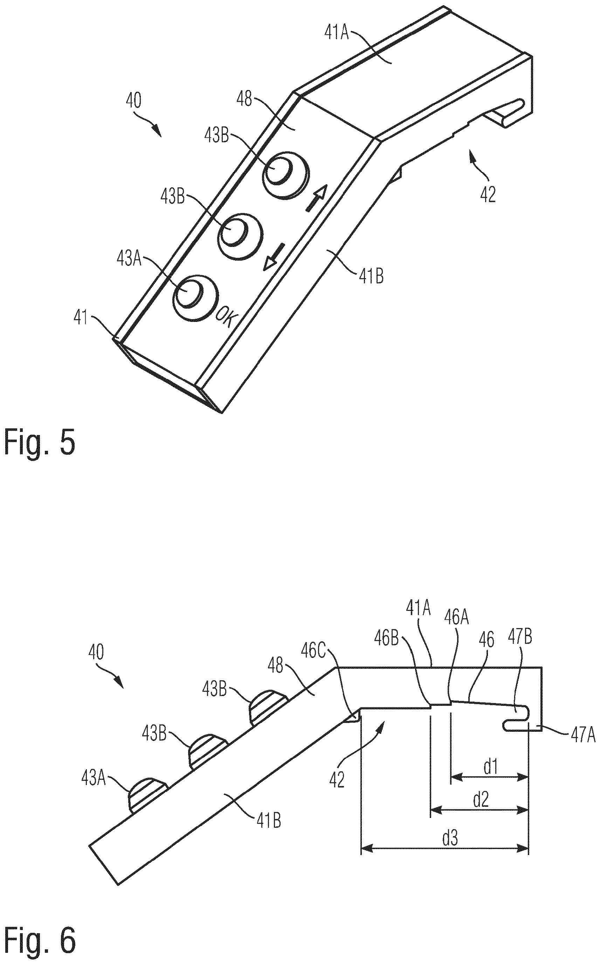

Wie in Fig. 4 schematisch dargestellt ist, definiert das Gehäuse 41 einen Innenraum, in welchem die Signalerzeugungsschaltung 44 und eine elektrische Energiequelle 45, z.B. eine Batterie, aufgenommen sind. Das Gehäuse 41 weist eine Kopplungsstruktur 42 auf, welche insbesondere in den Fign. 5 und 6 erkennbar ist. Die Kopplungsstruktur 42 dient zur lösbaren Befestigung, insbesondere formschlüssigen Befestigung der Fernbedienung an dem zu positionierenden ersten Bauteil 200.

In der in Fig. 6 beispielhaft dargestellten Seitenansicht der Fernbedienung 40 ist erkennbar, dass die Kopplungsstruktur 42 zum Beispiel durch eine eine Unterseite des Gehäuses 41 definierende Bodenwandung 46, einen hakenförmigen oder L-förmigen Bereich 47A und durch zumindest eine Stufe 46A, 46B, 46C der Bodenwandung gebildet sein kann. Wie in Fig. 6 beispielhaft dargestellt, kann der L-förmige Bereich einen ersten Steg aufweisen, der von der Bodenwandung 46 vorsteht und einen am entgegensetzt zu der Bodenwandung 46 gelegenen Ende des ersten Stegs angeordneten zweiten Steg, welcher sich parallel zur Bodenwandung 46 erstreckt. Somit wird zwischen der Bodenwandung 46 und dem zweiten Steg ein Aufnahmeraum 47B definiert. Die erste Stufe 46A wird durch einen im Wesentlichen parallel zu dem ersten Steg des L-förmigen Bereichs 47A verlaufenden Abschnitt der Bodenwandung 46 ausgebildet. Wie in Fig. 6 beispielhaft gezeigt ist, kann die erste Stufe 46A in einem ersten Abstand d1 zu dem hakenförmigen oder L-förmigen Bereich 47A angeordnet sein.

Wie in Fig. 6 ferner beispielhaft gezeigt ist, kann Kopplungsstruktur 42 optional zusätzlich zu der ersten Stufe 46A eine durch die Bodenwandung 46 gebildete zweite Stufe 46B aufweisen. Die zweite Stufe 46B ist in der gleichen Weise durch einen im Wesentlichen parallel zu dem ersten Steg des L-förmigen Bereichs 47A verlaufenden Abschnitt der Bodenwandung 46 ausgebildet, welcher in einem zweiten Abstand d2 zu dem hakenförmigen Bereich 47A angeordnet ist, wobei der zweite Abstand d2 größer als der erste Abstand d1 ist. Optional kann zusätzlich eine in gleicher Weise ausgebildete dritte Stufe 46C durch die Bodenwandung 46 gebildet sein. Die optionale dritte Stufe 46C ist in einem dritten Abstand d3 zu dem hakenförmigen Bereich 47A angeordnet, wobei der dritte Abstand d3 größer als der zweite Abstand d2 ist.

Wie in den Fign. 3, 5 und 6 beispielhaft dargestellt ist, können die Bedienelemente 43A, 43B insbesondere an einer eine Oberseite des Gehäuses 40 definierenden Abdeckwandung 48 angeordnet sein. Die Bedienelemente 43A, 43B können beispielsweise als Druckknöpfe realisiert sein, wie dies in den Fign. 3, 5 und 6 beispielhaft dargestellt ist. Optional kann das Gehäuse 41 der Fernbedienung 40 einen ersten Gehäuseabschnitt 41A aufweisen, in welchem die Kopplungsstruktur 42 ausgebildet ist, und einen zweiten Gehäuseabschnitt 41B, in welchem das erste Bedienelement 43A angeordnet ist, wobei der zweite Gehäuseabschnitt 41B sich angewinkelt relativ zu dem ersten Gehäuseabschnitt 41A erstreckt, wie dies in den Fign. 3, 5 und 6 rein beispielhaft dargestellt ist. Insbesondere können sowohl die Bodenwandung 46 als auch die Abdeckwandung 48jeweils zwei Abschnitte aufweisen, die winkelig zueinander verlaufen. Unabhängig von der spezifischen Form kann das Gehäuse 41 der Fernbedienung 40 zum Beispiel aus einem Kunststoffmaterial gebildet sein, z.B. aus einem thermoplastischen Kunststoffmaterial.

Die elektronische Signalerzeugungsschaltung 44 ist in Fig. 4 lediglich symbolisch dargestellt. Die Signalerzeugungsschaltung 44 kann beispielsweise einen Prozessor, z.B. in Form eines Mikroprozessors oder eines FPGAs aufweisen, elektrische Widerstände etc. aufweisen. Allgemein ist die Signalerzeugungsschaltung 44 dazu eingerichtet, in Antwort auf eine Betätigung des ersten Bedienelements 43A ein Bestätigungssignal zu erzeugen. Optional ist die Signalerzeugungsschaltung 44 ferner dazu eingerichtet, in Antwort auf eine Betätigung des zweiten Bedienelements 43B ein Auswahlsignal zu erzeugen. Allgemein ist die Signalerzeugungsschaltung 44 somit dazu eingerichtet, in Antwort auf eine Betätigung eines der Bedienelement 43A, 43B ein Signal zu erzeugen, insbesondere ein Funksignal. Ferner ist die Signalerzeugungsschaltung 44 dazu eingerichtet, das erzeugte Signal drahtlos an die Datenverarbeitungseinrichtung 20 zu senden. Hierzu kann die Signalerzeugungsschaltung 44 z.B. einen Transceiver (nicht dargestellt) aufwiesen.

Die Datenverarbeitungseinrichtung 20 erhält bei Betätigung des ersten Bedienelements 43A somit das Bestätigungssignal und ist dazu eingerichtet, in Antwort auf das Bestätigungssignal die gewählte Messeinstellung der Sensoranordnung 10 zu ändern. Wenn beispielsweise die Positionierung des ersten Verbindungsbereichs 210 des ersten Bauteils 200 abgeschlossen ist, z.B. wenn die Positionsabweichung des ersten Referenzpunktes 201 einen Schwellwert unterschreitet, kann die Person P1, die die Positionierung durchführt, das erste Bedienelement 43A betätigen, wodurch das Bestätigungssignal an die Datenverarbeitungseinrichtung 20 gesendet wird. Die Datenverarbeitungseinrichtung 20 steuert daraufhin die Sensoranordnung 10 an und schaltet diese von der ersten in die zweite Messeinstellung um.

Optional kann vorgesehen sein, dass die Datenverarbeitungseinrichtung 20 dazu eingerichtet ist, die Displayeinrichtung 30 zur Anzeige eines Indikators zu veranlassen, wenn die Positionsabweichung des jeweiligen Referenzpunktes 201 einen Schwellwert unterschreitet. Beispielsweise kann für jede an der Displayeinrichtung 30 angezeigte Koordinate X, Y, Z der Positionsabweichung ein Symbol oder eine farbliche Markierung angezeigt werden, wenn der Schwellwert für die jeweilige Koordinate unterschritten wird.

Wie bereits beschrieben können in dem Datenspeicher 22 der Datenverarbeitungseinrichtung 20 die ersten und zweiten Soll-Positionen für eine Vielzahl von ersten Bauteilen 200 gespeichert sein. Beispielsweise können für die in Fig. 2 gezeigte Montage mehrerer Querträger 250 für jeden der Querträger 250 Soll-Positionen für den ersten und den zweiten Referenzpunkt 201, 202 gespeichert sein. Die Datenverarbeitungseinrichtung 20 kann optional dazu eingerichtet sein, die Displayeinrichtung 30 zur Anzeige eines graphischen Symbols 35 zu veranlassen, welches einem aktuell aus der Vielzahl von ersten Bauteilen 200 ausgewählten ersten Bauteil 200 zugeordnet ist. Beispielsweise kann jedem Querträger 250 bzw. jedem ersten Bauteil 200 eine Nummer oder eine Identifizierung zugeordnet sein, welche als graphisches Symbol 35 an der Displayeinrichtung 30 angezeigt werden kann. Das aktuell ausgewählte Bauteil 200, für das das graphische Symbol 35 angezeigt wird, wird mit der Sensoranordnung 11 vermessen, das heißt, für das ausgewählte erste Bauteil 200 ermittelt die Datenverarbeitungseinrichtung 20 basierend auf der je nach Messeinstellung erfassten aktuellen Position des ersten oder des zweiten Referenzpunktes 201, 202 und der Soll-Position des ersten oder des zweiten Referenzpunktes 201, 202 die jeweilige aktuelle erste oder zweite Positionsabweichung des ausgewählten ersten Bauteils 200 und veranlasst die Displayeinrichtung 30 zur Anzeige der ermittelten Positionsabweichung. Durch die Betätigung eines der zweiten Bedienelemente 43B kann die Person P1, P2, die die Positionierung des Bauteils 200 vornimmt, die Signalerzeugungsschaltung 44 zur Erzeugung eines Auswahlsignals veranlassen, um ein anderes Bauteil 200 aus der Vielzahl an ersten Bauteilen 200 auszuwählen. Die Signalerzeugungsschaltung 44 sendet das Auswahlsignal an die Datenverarbeitungseinrichtung 20, wobei die Datenverarbeitungseinrichtung 20 dazu eingerichtet ist, in Antwort auf das Auswahlsignal ein anderes erstes Bauteil 200 aus der Vielzahl von ersten Bauteilen 200 auszuwählen. Folglich wird ein zu dem neu ausgewählten ersten Bauteil 200 gehöriges Symbol 35 angezeigt und die Messeinstellung der Sensoranordnung wird für die Vermessung dieses Bauteils 200 geändert.

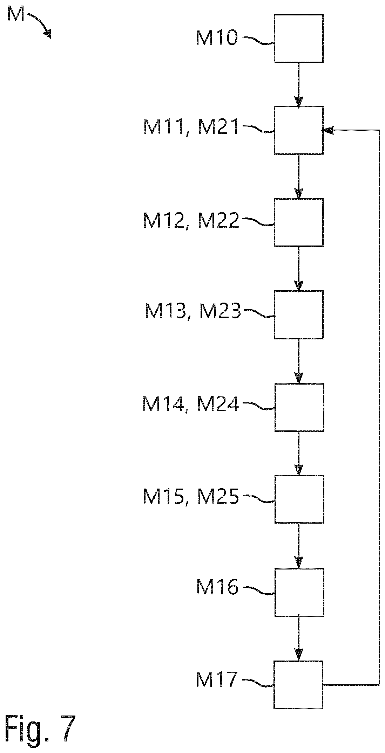

Fig. 7 zeigt schematisch den Ablauf eines Verfahrens M zum Positionieren eines ersten Bauteils 200 relativ zu einem ortsfesten zweiten Bauteil 300. Das Verfahren wird nachfolgend unter Bezugnahme auf das beschriebene Assistenzsystem 100 erläutert. Das Verfahren kann beispielsweise eingesetzt werden, um einen Querträger 250 als erstes Bauteil 200 an einem Spant oder Umfangsträger 350 als ortsfestes zweites Bauteil 300 zu positionieren. Wie in Fig. 2 beispielhaft gezeigt ist, kann die Rumpfstruktur 400 mehrere parallel zueinander angeordnete ringsegmentförmige Umfangsträger 350 aufweisen, welche durch Stringer 450 miteinander verbunden sind. Die Querträger 250 weisen an entgegengesetzten Endbereichen jeweils Endbeschläge 251 (Fig. 3) auf, welche zur Anbringung an dem Umfangsträger 350 vorgesehen sind. Insbesondere bilden die Endbeschläge 251 Verbindungsbereiche 210, 220 des Querträgers 250. Wie in Fig. 3 erkennbar ist, sollen die Endbeschläge 251 des Querträgers 250 mit in Umfangsrichtung beabstandeten Verbindungsbereichen des Umfangsträgers 350 verbunden werden.

Wie in Fig. 7 gezeigt ist, beginnt das Verfahren M mit Schritt M10. In diesem Schritt erfolgt ein Befestigen M10 der Fernbedienung 40 mit deren Kopplungsstruktur 42 an dem zu positionierenden ersten Bauteil 200. Beispielsweise kann die Kopplungsstruktur 42 an dem Querträger 250 eingehängt werden, wie dies in Fig. 3 beispielhaft gezeigt ist.

In Schritt M11 erfolgt ein Annähern M11 eines ersten Verbindungsbereichs 210 des ersten Bauteils 200 an einen ersten Verbindungsbereich des zweiten Bauteils 300. Beispielsweise kann eine Person P1 den Endbeschlag 251 des Querträgers 250 an den ersten Verbindungsbereich des Umfangsträgers 350 heranführen, wie dies in Fig. 2 beispielhaft und schematisch dargestellt ist. Währenddessen erfolgt in Schritt M12 ein Erfassen M12 der aktuellen Position des ersten Referenzpunktes 201 des ersten Bauteils 200 mittels der Sensoranordnung 10, welche somit mit einer ersten Messeinstellung betrieben wird. Wie in Fig. 3 beispielhaft gezeigt ist, kann z.B. der Reflektor 12 in die den Referenzpunkt 201 bildenden Bohrung eingesetzt sein und durch den Lasertracker 11 mit einem Laserstrahl B11 bestrahlt werden. Die Sensoranordnung 11 ermittelt daraus, wie oben beschrieben, die aktuelle oder Ist-Position des ersten Referenzpunktes 201 des ersten Bauteils 200.

In einem weiteren Schritt M13 ermittelt die Datenverarbeitungseinrichtung 20 die erste Positionsabweichung des ersten Referenzpunktes 201 durch Vergleich der aktuellen Position des ersten Referenzpunktes 201 mit der Soll-Position des ersten Referenzpunktes 20. In Schritt M14 wird die ermittelte erste Positionsabweichung mittels der Displayeinrichtung 30 angezeigt. Wie dies in Fig. 2 beispielhaft dargestellt ist, kann die Displayeinrichtung 30 im Sichtfeld V1, V2 der Personen P1, P2 angeordnet sein, die die Positionierung des Bauteils 200 durchführen. Bei der Montage einer Rumpfstruktur 400, wie dies in Fig. 2 beispielhaft gezeigt ist, kann die Displayeinrichtung 30 beispielsweise quer zu einer durch die Umfangsträger 350 definierten Rumpflängsachse ausgerichtet und gegenüberliegend zu den Querträgern 250 angeordnet sein. In Fig. 2 ist beispielhaft gezeigt, dass für alle drei Koordinatenachsen K1, K2, K3 des Bezugskoordinatensystems KS Koordinaten X, Y, Z der Positionsabweichung angezeigt werden.

Wenn die Positionsabweichung einen vorbestimmten ersten Schwellwert unterschreitet, kann optional ein graphischer Indikator an der Displayeinrichtung 30 angezeigt werden, wie dies bereits beschrieben wurde, und in Schritt M15 erfolgt ein Fixieren des ersten Verbindungsbereichs 210 des ersten Bauteils 200 an dem ersten Verbindungsbereich 210 des zweiten Bauteils 300. Beispielsweise kann der Endbeschlag 251 des Querträgers 250 an dem Verbindungsbereich des Umfangsträgers 350 fixiert werden, z.B. mittels einer Schraubzwinge.

Wenn die Positionierung des ersten Verbindungsbereichs 210 des ersten Bauteils 200 abgeschlossen ist, kann die Person P1 oder P2 das erste Bedienelement 43A der Fernbedienung 40 betätigen (Schritt M16), um ein Bestätigungssignal an die Datenverarbeitungseinrichtung 20 zu senden. In Schritt M17 schaltet die Datenverarbeitungseinrichtung 20 die Sensoranordnung 10 in Antwort auf das Bestätigungssignal in die zweite Messeinstellung um, so dass die Sensoranordnung 10 nunmehr die aktuelle oder Ist-Position des zweiten Referenzpunktes 202 des ersten Bauteils 200 erfasst (Schritt M22).

Die Schritte M21-M25 entsprechen den Schritten M11-M15, wobei diese am zweiten Verbindungsbereich 220 des ersten Bauteils 200 durchgeführt werden. In Schritt M21 erfolgt ein Annähern des zweiten Verbindungsbereichs 220 des ersten Bauteils 200 an den zweiten Verbindungsbereich 220 des zweiten Bauteils 300. Beispielsweise kann in Fig. 2 der noch unfixierte Endbeschlage 251 von der Person P2 an den zweiten Verbindungsbereich des Umfangträgers 350 herangeführt werden. In Schritt M23 ermittelt die Datenverarbeitungseinrichtung 20 die zweite Positionsabweichung des zweiten Referenzpunktes 202 des ersten Bauteils 200. In Schritt M24 wird die zweite Positionsabweichung mittels der Displayeinrichtung 30 angezeigt und in Schritt M25 erfolgt ein Fixieren M25 des zweiten Verbindungsbereichs 220 des ersten Bauteils 200 an dem zweiten Verbindungsbereich 220 des zweiten Bauteils 300, wenn die Positionsabweichung einen vorbestimmten zweiten Schwellwert unterschreitet.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 10: Sensoranordnung
- 11: Lasertracker
- 12: Reflektor
- 20: Datenverarbeitungseinrichtung
- 21: Prozessor
- 22: Datenspeicher
- 30: Displayeinrichtung
- 35: graphisches Symbol
- 40: Fernbedienung
- 41: Gehäuse der Fernbedienung
- 41A: erster Gehäuseabschnitt
- 41B: zweiter Gehäuseabschnitt
- 42: Kopplungsstruktur
- 43A: erstes Bedienelement
- 43B: zweites Bedienelement
- 44: Signalerzeugungsschaltung
- 45: elektrische Energiequelle
- 46: Bodenwandung
- 46A: erste Stufe
- 46B: zweite Stufe
- 46C: dritte Stufe
- 47A: hakenförmiger Bereich
- 47B: Aufnahmeraum
- 48: Abdeckwandung

- 100: Assistenzsystem
- 200: erstes Bauteil
- 201: erster Referenzpunkt des ersten Bauteils
- 202: zweiter Referenzpunkt des ersten Bauteils
- 210: erster Verbindungsbereich des ersten Bauteils
- 220: zweiter Verbindungsbereich des ersten Bauteils
- 250: Querträger
- 300: zweites Bauteil
- 350: Umfangsträger / Spant
- 400: Rumpfstruktur
- 450: Stringer

- B11: Laserstrahl
- d1: erster Abstand
- d2: zweiter Abstand
- d3: dritter Abstand
- KS: Bezugskoordinatensystem
- K1-K3: Koordinatenachsen

## Patentansprüche

1. Assistenzsystem (100) für die Positionierung eines zu positionierenden ersten Bauteils (200) relativ zu einem zweiten Bauteil (300), mit:
einer Sensoranordnung (10), welche dazu eingerichtet ist, in einer ersten Messeinstellung eine aktuelle Position eines ersten Referenzpunktes (201) des ersten Bauteils (200) und in einer zweiten Messeinstellung eine aktuelle Position eines zweiten Referenzpunktes (202) des ersten Bauteils (200) zu erfassen;
einer mit der Sensoranordnung (10) kommunikationsverbundenen Datenverarbeitungseinrichtung (20), welche dazu eingerichtet ist, die Messeinstellung der Sensoranordnung (10) zu steuern und basierend auf der je nach Messeinstellung erfassten aktuellen Position des ersten oder des zweiten Referenzpunktes (201; 202) und einer Soll-Position des ersten oder des zweiten Referenzpunktes (201; 202) eine aktuelle erste oder zweite Positionsabweichung zu ermitteln;
einer mit der Datenverarbeitungseinrichtung (20) kommunikationsverbundenen Displayeinrichtung (30), welche dazu eingerichtet ist, die aktuelle erste oder zweite Positionsabweichung graphisch auszugeben; und
einer Fernbedienung (40) mit einem Gehäuse (41), welches eine Kopplungsstruktur (42) zur lösbaren Kopplung der Fernbedienung (40) an das erste Bauteil (200) aufweist, einem ersten Bedienelement (43A) und einer in dem Gehäuse (41) aufgenommenen elektronischen Signalerzeugungsschaltung (44), welche dazu eingerichtet ist, in Antwort auf eine Betätigung des ersten Bedienelements (43A) ein Bestätigungssignal zu erzeugen und drahtlos an die Datenverarbeitungseinrichtung (20) zu senden;
wobei die Datenverarbeitungseinrichtung (20) dazu eingerichtet ist, in Antwort auf das Bestätigungssignal die gewählte Messeinstellung der Sensoranordnung (10) zu ändern.

2. System (100) nach Anspruch 1, wobei das Gehäuse (41) der Fernbedienung (40) einen ersten Gehäuseabschnitt (41A) aufweist, in welchem die Kopplungsstruktur (42) ausgebildet ist, und einen zweiten Gehäuseabschnitt (41B), in welchem das erste Bedienelement (43A) angeordnet ist und welcher sich angewinkelt relativ zu dem ersten Gehäuseabschnitt (41A) erstreckt.

3. System (100) nach Anspruch 1 oder 2, wobei die Kopplungsstruktur (42) eine eine Unterseite des Gehäuses (41) definierende Bodenwandung (46) und einen von der Bodenwandung (46) vorspringenden hakenförmigen oder L-förmigen Bereich (47A) aufweist, und wobei die Bodenwandung (46A) eine in einem ersten Abstand (d1) zu dem hakenförmigen oder L-förmigen Bereich (47A) angeordnete erste Stufe (46A) ausbildet.

4. System (100) nach Anspruch 3, wobei die Bodenwandung (46) zusätzlich zu der ersten Stufe (46A) eine zweite Stufe (46B) ausbildet, welche in einem zweiten Abstand (d2) zu dem hakenförmigen Bereich (47A) angeordnet ist, wobei der zweite Abstand (d2) größer als der erste Abstand (d1) ist.

5. System (100) nach einem der voranstehenden Ansprüche, wobei das Gehäuse (41) der Fernbedienung (40) aus einem Kunststoffmaterial gebildet ist.

6. System (100) nach einem der voranstehenden Ansprüche, wobei das erste Bedienelement (43A) als Druckknopf ausgebildet ist.

7. System (100) nach einem der voranstehenden Ansprüche, wobei die Datenverarbeitungseinrichtung (20) einen Datenspeicher (22) aufweist, in welchem die ersten und zweiten Soll-Positionen für eine Vielzahl von ersten Bauteilen (200) gespeichert sind, wobei die Datenverarbeitungseinrichtung (20) dazu eingerichtet ist, die Displayeinrichtung (30) zur Anzeige eines graphischen Symbols (35) zu veranlassen, welches einem aktuell aus der Vielzahl von ersten Bauteilen (200) ausgewählten ersten Bauteil (200) zugeordnet ist, für das ausgewählte erste Bauteil (200) basierend auf der je nach Messeinstellung erfassten aktuellen Position des ersten oder des zweiten Referenzpunktes (201; 202) und der Soll-Position des ersten oder des zweiten Referenzpunktes (201; 202) eine aktuelle erste oder zweite Positionsabweichung des ausgewählten ersten Bauteils (200) zu ermitteln und die Displayeinrichtung (30) zur Anzeige der ermittelten Positionsabweichung zu veranlassen, wobei die Fernbedienung (40) zumindest ein zweites Bedienelement (43B) aufweist und die Signalerzeugungsschaltung (44) dazu eingerichtet ist, in Antwort auf die Betätigung des zweiten Bedienelements (43B) ein Auswahlsignal zu erzeugen und an die Datenverarbeitungseinrichtung (20) zu senden, und wobei die Datenverarbeitungseinrichtung (20) dazu eingerichtet ist, in Antwort auf das Auswahlsignal ein anderes erstes Bauteil (200) aus der Vielzahl von ersten Bauteilen (200) auszuwählen.

8. System (100) nach einem der voranstehenden Ansprüche, wobei die Datenverarbeitungseinrichtung (20) dazu eingerichtet ist, die Displayeinrichtung (30) zur Anzeige eines Indikators zu veranlassen, wenn die Positionsabweichung einen Schwellwert unterschreitet.

9. System (100) nach einem der voranstehenden Ansprüche, wobei die Sensoranordnung (10) einen Lasertracker (11) aufweist.

10. Verfahren (M) zum Positionieren eines ersten Bauteils (200) relativ zu einem ortsfesten zweiten Bauteil (300), umfassend:
- Befestigen (M10) einer Fernbedienung (40) an dem ersten Bauteil (200);
- Annähern (M11) eines ersten Verbindungsbereichs (210) des ersten Bauteils (200) an einen ersten Verbindungsbereich des zweiten Bauteils (300);
- Erfassen (M12) einer aktuellen Position eines im Bereich des ersten Verbindungsbereichs (210) gelegenen ersten Referenzpunktes (201) des ersten Bauteils (200) mittels einer Sensoranordnung (10), welche mit einer ersten Messeinstellung betrieben wird;
- Ermitteln (M13) einer ersten Positionsabweichung des ersten Referenzpunktes (201) durch Vergleich der aktuellen Position des ersten Referenzpunktes (201) mit einer Soll-Position des ersten Referenzpunktes (201) mittels einer Datenverarbeitungseinrichtung (20);
- Anzeigen (M14) der ersten Positionsabweichung mittels einer Displayeinrichtung (30);
- Fixieren (M15) des ersten Verbindungsbereichs (210) des ersten Bauteils (200) an dem ersten Verbindungsbereich (210) des zweiten Bauteils (300), wenn die Positionsabweichung einen vorbestimmten ersten Schwellwert unterschreitet;
- Betätigen (M16) eines ersten Bedienelements (43A) der Fernbedienung (40), um ein Bestätigungssignal an die Datenverarbeitungseinrichtung (20) zu senden;
- Umschalten (M17) der Sensoranordnung (10) in eine zweite Messeinstellung mittels der Datenverarbeitungseinrichtung (20) in Antwort auf das Bestätigungssignal;
- Annähern (M21) eines zweiten Verbindungsbereichs (220) des ersten Bauteils (200) an einen zweiten Verbindungsbereich (220) des zweiten Bauteils (300);
- Erfassen (M22) einer aktuellen Position eines im Bereich des zweiten Verbindungsbereichs (220) gelegenen zweiten Referenzpunktes (202) des ersten Bauteils (200) mittels der Sensoranordnung (10), welche mit der zweiten Messeinstellung betrieben wird;
- Ermitteln (M23) einer zweiten Positionsabweichung des zweiten Referenzpunktes (202) durch Vergleich der aktuellen Position des zweiten Referenzpunktes (202) mit einer Soll-Position des zweiten Referenzpunktes (202) mittels der Datenverarbeitungseinrichtung (20);
- Anzeigen (M24) der zweiten Positionsabweichung mittels der Displayeinrichtung (30); und
- Fixieren (M25) des zweiten Verbindungsbereichs (220) des ersten Bauteils (200) an dem zweiten Verbindungsbereich (220) des zweiten Bauteils (300), wenn die Positionsabweichung einen vorbestimmten zweiten Schwellwert unterschreitet.

11. Verfahren nach Anspruch 10, wobei das zweite Bauteil (300) ein ringförmiger oder ringsegmentförmiger Umfangsträger (350) einer Rumpfstruktur für ein Luftfahrzeug ist, wobei das erste Bauteil (200) ein Querträger (250) für einen Fußboden ist, wobei der erste und der zweite Verbindungsbereich (210; 220) des Querträgers (250) durch entgegengesetzt zueinander gelegene Endbereiche des Querträgers (250) gebildet sind.

## Claims

1. Assistance system (100) for positioning of a first component (200) to be positioned relative to a second component (300), with:
a sensor arrangement (10) which is set up to detect a current position of a first reference point (201) of the first component (200) in a first measurement setting and a current position of a second reference point (202) of the first component (200) in a second measurement setting;
a data processing device (20) connected in communication with the sensor arrangement (10), which data processing device (20) is set up to control the measurement setting of the sensor arrangement (10) and to determine a current first or second position deviation based on the current position of the first or second reference point (201; 202) detected depending on the measurement setting and a target position of the first or second reference point (201; 202);
a display device (30) which is connected in communication with the data processing device (20) and which is set up to output the current first or second position deviation graphically; and
a remote controller (40) with a housing (41) having a coupling structure (42) for detachably coupling the remote controller (40) to the first component (200), a first operating element (43A), and an electronic signal generating circuit (44) housed in the housing (41) and which signal generating circuit (44) is set up in reaction to an operation of the first operating element (43A) to generate a confirmation signal and wirelessly transmit to the data processing device (20);
wherein the data processing device (20) is set up to change the selected measurement setting of the sensor arrangement (10) in reaction to the confirmation signal.

2. System (100) according to claim 1, wherein the housing (41) of the remote control (40) comprises a first housing section (41A), in which the coupling structure (42) is formed, and a second housing section (41B), in which the first operating element (43A) is arranged and which extends at an angle relative to the first housing section (41A).

3. System (100) according to claim 1 or 2, wherein the coupling structure (42) comprises a bottom wall (46) defining an underside of the housing (41) and a hook-shaped or L-shaped region (47A) projecting from the bottom wall (46), and wherein the bottom wall (46A) forms a first step (46A) arranged at a first distance (d1) from the hook-shaped or L-shaped region (47A).

4. System (100) according to claim 3, wherein the bottom wall (46) forms, in addition to the first step (46A), a second step (46B) which is arranged at a second distance (d2) from the hook-shaped region (47A), wherein the second distance (d2) is greater than the first distance (d1).

5. System (100) according to one of the preceding claims, wherein the housing (41) of the remote control (40) is formed from a plastic material.

6. System (100) according to one of the preceding claims, wherein the first operating element (43A) is designed as a push button.

7. System (100) according to one of the preceding claims, wherein the data processing device (20) comprises a data memory (22) in which the first and second target positions for a plurality of first components (200) are stored, wherein the data processing device (20) is set up to causing the display device (30) to show a graphic symbol (35), which is assigned to a first component (200) currently selected from the plurality of first components (200), for the selected first component (200) based on the current position of the first or second reference point (201; 202) detected depending on the measurement setting and the target position of the first or second reference point (201; 202), to determine a current first or second position deviation of the selected first component (200) and to cause the display device (30) to show the determined position deviation, wherein the remote control (40) has at least one second operating element (43B) and the signal generating circuit (44) is set up for generating a selection signal in reaction to the operation of the second operating element (43B) and transmitting it to the data processing device (20), and wherein the data processing device (20) is set up to select another first component (200) from the plurality of first components (200) in reaction to the selection signal.

8. System (100) according to one of the preceding claims, wherein the data processing device (20) is set up to cause the display device (30) to show an indicator when the position deviation falls below a threshold value.

9. System (100) according to one of the preceding claims, wherein the sensor arrangement (10) comprises a laser tracker (11).

10. A method (M) of positioning a first component (200) relative to a stationary second component (300), comprising:
- Attaching (M10) a remote control (40) to the first component (200);
- Bringing (M11) a first connecting region (210) of the first component (200) closer to a first connecting region of the second component (300);
- Detecting (M12) a current position of a first reference point (201) of the first component (200) located in the region of the first connecting region (210) by means of a sensor arrangement (10), which is operated with a first measurement setting;
- Determining (M13) a first position deviation of the first reference point (201) by comparing the current position of the first reference point (201) with a target position of the first reference point (201) by means of a data processing device (20);
- Displaying (M14) the first position deviation by means of a display device (30);
- Fixing (M15) the first connecting region (210) of the first component (200) to the first connecting region (210) of the second component (300) when the position deviation falls below a predetermined first threshold value;
- Actuating (M16) a first operating element (43A) of the remote control (40) to send a confirmation signal to the data processing device (20);
- Switching (M17) the sensor arrangement (10) to a second measurement setting by means of the data processing device (20) in reaction to the confirmation signal;
- Approaching (M21) a second connecting region (220) of the first component (200) to a second connecting region (220) of the second component (300);
- Detecting (M22) a current position of a second reference point (202) located in the region of the second connecting region (220) of the first component (200) by means of the sensor arrangement (10), which is operated with the second measurement setting;
- Determining (M23) a second position deviation of the second reference point (202) by comparing the current position of the second reference point (202) with a target position of the second reference point (202) by means of the data processing device (20);
- Showing (M24) the second position deviation by means of the display device (30); and
- Fixing (M25) the second connecting region (220) of the first component (200) to the second connecting region (220) of the second component (300) when the position deviation falls below a predetermined second threshold value.

11. Method according to claim 10, wherein the second component (300) is an annular or annular segment-shaped peripheral beam (350) of a fuselage structure for an aircraft, wherein the first component (200) is a cross member (250) for a floor, wherein the first and second connecting regions (210; 220) of the cross member (250) are formed by opposite end portions of the cross member (250).

## Revendications

1. Système d'assistance (100) pour le positionnement d'un premier composant (200) à positionner par rapport à un deuxième composant (300), avec :
un agencement de capteurs (10), qui est conçu pour détecter, dans un premier réglage de mesure, une position actuelle d'un premier point de référence (201) du premier composant (200) et, dans un deuxième réglage de mesure, une position actuelle d'un deuxième point de référence (202) du premier composant (200);
un dispositif de traitement de données (20) relié par communication à l'agencement de capteurs (10), qui est conçu pour commander le réglage de mesure de l'agencement de capteurs (10) et pour déterminer un premier ou un deuxième écart de position actuel sur la base de la position actuelle du premier ou du deuxième point de référence (201; 202) détectée selon le réglage de mesure et d'une position de consigne du premier ou du deuxième point de référence (201; 202);
un dispositif d'affichage (30) relié par communication au dispositif de traitement de données (20), qui est conçu pour émettre graphiquement le premier ou le deuxième écart de position actuel; et
une télécommande (40) comprenant un boîtier (41) qui présente une structure de couplage (42) pour le couplage amovible de la télécommande (40) au premier composant (200), un premier élément de commande (43A) et un circuit de génération de signal électronique (44) logé dans le boîtier (41), dans lequel le circuit de génération de signal (44) est conçu pour générer un signal de confirmation en réaction à un actionnement du premier élément de commande (43A) et pour l'envoyer sans fil au dispositif de traitement de données (20);
dans lequel le dispositif de traitement de données (20) est conçu pour modifier le réglage de mesure sélectionné de agencement de capteurs (10) en réaction au signal de confirmation.

2. Système (100) selon la revendication 1, dans lequel le boîtier (41) de la télécommande (40) comprend une première partie de boîtier (41A) dans laquelle la structure de couplage (42) est formée, et une deuxième partie de boîtier (41B) dans laquelle le premier élément de commande (43A) est disposé et qui s'étend de manière inclinée par rapport à la première partie de boîtier (41A).

3. Système (100) selon la revendication 1 ou 2, dans lequel la structure de couplage (42) comprend une paroi de fond (46) définissant une face inférieure du boîtier (41) et une partie en forme de crochet ou de L (47A) faisant saillie de la paroi de fond (46), et dans lequel la paroi de fond (46A) forme un premier gradin (46A) disposé à une première distance (d1) de la partie en forme de crochet ou de L (47A).

4. Système (100) selon la revendication 3, dans lequel la paroi de fond (46) forme, en plus du premier gradin (46A), un deuxième gradin (46B) qui est disposé à une deuxième distance (d2) de la zone en forme de crochet (47A), la deuxième distance (d2) étant supérieure à la première distance (d1).

5. Système(100) selon l'une des revendications précédentes, dans lequel le boîtier (41) de la télécommande (40) est formé d'un matériau plastique.

6. Système(100) selon l'une des revendications précédentes, dans lequel le premier élément de commande (43A) est formé comme un bouton-poussoir.

7. Système(100) selon l'une des revendications précédentes, dans lequel le dispositif de traitement de données (20) comprend une mémoire de données (22) dans laquelle sont stockées les premières et deuxièmes positions de consigne pour une pluralité de premiers composants (200), dans lequel le dispositif de traitement de données (20) est conçu pour d'amener le dispositif d'affichage (30) à afficher un symbole graphique (35) qui est associé à un premier composant (200) actuellement sélectionné parmi la pluralité de premiers composants (200), pour le premier composant sélectionné (200) sur la base de la position actuelle du premier ou du deuxième point de référence (201; 202), détectée selon le réglage de mesure et la position de consigne du premier ou du deuxième point de référence (201; 202) pour déterminer un premier ou un deuxième écart de position actuel du premier composant (200) sélectionné et pour faire en sorte que le dispositif d'affichage (30) affiche l'écart de position déterminé, dans lequel la télécommande (40) présentant au moins un deuxième élément de commande (43B) et le circuit de génération de signal (44) étant conçu à cet effet, générer un signal de sélection en réaction à l'actionnement du deuxième élément de commande (43B) et l'envoyer au dispositif de traitement de données (20), et dans lequel le dispositif de traitement de données (20) est conçu pour sélectionner un autre premier composant (200) parmi la pluralité de premiers composants (200) en réaction au signal de sélection.

8. Système(100) selon l'une des revendications précédentes, dans lequel le dispositif de traitement de données (20) est conçu pour faire en sorte que le dispositif d'affichage (30) affiche un indicateur lorsque l'écart de position est inférieur à une valeur de seuil.

9. Système(100) selon l'une des revendications précédentes, dans lequel l'agencement de capteurs (10) comprend un dispositif de poursuite laser (11).

10. Procédé (M) de positionnement d'un premier composant (200) par rapport à un second composant fixe (300), comprenant :
- Fixer (M10) une télécommande (40) sur le premier composant (200);
- Rapprocher (M11) une première zone de liaison (210) du premier composant (200) d'une première zone de liaison du second composant (300);
- Détecter (M12) d'une position actuelle d'un premier point de référence (201) du premier composant (200) situé dans la zone de la première zone de liaison (210) au moyen d'un agencement de capteurs (10) qui est exploité avec un premier réglage de mesure;
- Déterminer (M13) un premier écart de position du premier point de référence (201) en comparant la position actuelle du premier point de référence (201) avec une position de consigne du premier point de référence (201) au moyen d'un dispositif de traitement de données (20);
- Afficher (M14) le premier écart de position au moyen d'un dispositif d'affichage (30);
- Fixer (M15) la première zone de liaison (210) du premier composant (200) sur la première zone de liaison (210) du deuxième composant (300) lorsque l'écart de position est inférieur à une première valeur de seuil prédéterminée;
- Actionner (M16) un premier élément de commande (43A) de la télécommande (40) afin d'envoyer un signal de confirmation au dispositif de traitement de données (20);
- Commuter (M17) de l'agencement de capteurs (10) dans un deuxième réglage de mesure au moyen du dispositif de traitement de données (20) en réaction au signal de confirmation;
- Approcher (M21) une deuxième zone de liaison (220) du premier composant (200) d'une deuxième zone de liaison (220) du deuxième composant (300);
- Détecter (M22) d'une position actuelle d'un deuxième point de référence (202) du premier composant (200) situé dans la zone de la deuxième zone de liaison (220) au moyen de l'agencement de capteurs (10) qui fonctionne avec le deuxième réglage de mesure;
- Déterminer (M23) d'un deuxième écart de position du deuxième point de référence (202) par comparaison de la position actuelle du deuxième point de référence (202) avec une position de consigne du deuxième point de référence (202) au moyen du dispositif de traitement de données (20);
- Afficher (M24) du deuxième écart de position au moyen du dispositif d'affichage (30); et
- Fixer (M25) la deuxième zone de liaison (220) du premier composant (200) sur la deuxième zone de liaison (220) du deuxième composant (300) lorsque l'écart de position est inférieur à une deuxième valeur de seuil prédéterminée.

11. Procédé selon la revendication 10, dans lequel le deuxième composant (300) est une poutre périphérique annulaire ou en forme de segment annulaire (350) d'une structure de fuselage pour un aéronef, dans lequel le premier composant (200) est une poutre transversale (250) pour un plancher, dans lequel les première et deuxième zones de liaison (210; 220) de la poutre transversale (250) sont formées par des zones d'extrémité opposées de la poutre transversale (250).
